# EUROPÄISCHE PATENTSCHRIFT

(11) **EP 2 342 705 B1**
(45) Veröffentlichungstag und Bekanntmachung des Hinweises auf die Patenterteilung: **28.06.2017**
(21) Anmeldenummer: 09783169.7
(22) Anmeldetag: 18.09.2009
(51) Int. Cl.: G08G 1/16, G07C 5/08, G01S 15/93

(54) **SYSTEM ZUR KOLLISIONSAUFZEICHNUNG**
COLLISION RECORDING SYSTEM
SYSTÈME D'ENREGISTREMENT DE COLLISION

(30) Priorität: 19.09.2008 DE 102008048163
(43) Veröffentlichungstag der Anmeldung: 13.07.2011
(73) Patentinhaber: Continental Automotive GmbH, 30165 Hannover (DE)
(72) Erfinder: PLANKENHORN, Horst, 78048 Villingen-Schwenningen (DE); REITMEIER, Willibald, 93155 Hohenschambach (DE); SCHÄDLICH, Denny, 08223 Neustadt (DE)
(86) Internationale Anmeldenummer: PCT/EP2009/062111
(87) Internationale Veröffentlichungsnummer: WO 2010/031836

(56) Entgegenhaltungen:
- WO-A1-01/18491
- DE-A1- 10 223 123
- DE-A1- 19 712 522
- DE-C1- 10 106 181
- GB-A- 2 268 608

## Beschreibung

Die Erfindung betrifft ein System zur Kollisionsaufzeichnung in Kraftfahrzeugen sowie ein Verfahren zum Betreiben des Systems nach den Oberbegriffen der unabhängigen Ansprüche in Verbindung mit den kennzeichnenden Merkmalen derselben.

Aus dem Stand der Technik sind Kollisionsvermeidungssysteme bekannt. Die Druckschrift US 7 102 496 B1 offenbart ein Multi-Sensor-System, welches unter anderem als Kollisionsvermeidungsvorrichtung fungiert.

Das Dokument GB2268608 offenbart ein System zur Kollisionsaufzeichnung in Kraftfahrzeugen , wobei das System eine Steuereinheit aufweist, die einerseits mit am oder im Fahrzeug anordenbaren Ultraschallsensoren und andererseits mit im Kraftfahrzeug anordenbaren Beschleunigungsmessern verbunden ist, wobei Unfallereignisse von der Steuereinheit aufgrund von Beschleunigungswerten detektierbar sind und auch bei einer von den Ultraschallsensoren ermittelten Annäherung oder einem Kontakt mit einem Kollisionskörper aufzeichenbar sind. Ultraschallsysteme sind in der Fahrzeugindustrie bereits bekannt und finden beispielsweise in Parkassistenten für Fahrzeuge Anwendung. Die Ultraschallparksensoren können bei niedrigen Geschwindigkeiten, beim Einlegen des Rückwärtsgangs und/oder manuell aktiviert werden. Die Sensoren übernehmen bei diesen niedrigen Geschwindigkeiten die Funktion von Annäherungs- bzw. Kollisionsdetektoren.

Die bekannten Vorrichtungen haben den Nachteil, dass während des normalen Fahrbetriebs aktive Kollisionsdetektoren lediglich ab einer bestimmten Aufprallkraft eines Kollisionskörpers auf ein Fahrzeug aktiv werden. So genannte Soft-Targets wie Menschen werden aufgrund zu geringer Aufprallkraft von den Detektoren nicht wahrgenommen und somit nicht detektiert.

Der Erfindung liegt die Aufgabe zugrunde, ein Kollisionsdetektionssystem zu schaffen, welches einen möglichen Kollisionskörper frühzeitig erkennt und ein Unfallereignis bereits bei einer geringen Aufprallkraft detektiert.

Diese Aufgabe wird erfindungsgemäß durch die Merkmale des Hauptanspruchs gelöst.

Dies sind die Merkmale eines Systems zur Kollisionsaufzeichnung in Fahrzeugen, wobei das System eine Steuereinheit aufweist, die einerseits mit am und/oder im Fahrzeug anordenbaren Ultraschallsensoren und andererseits mit im Kraftfahrzeug anordenbaren Beschleunigungsmessern verbunden sein kann. Unfallereignisse können von der Steuereinheit aufgrund von Beschleunigungswerten oberhalb eines Grenzwertes detektiert werden. Erfindungsgemäß werden nun auch Ereignisse unterhalb dieses Grenzwertes, bei einer, von den Ultraschallsensoren ermittelten Annäherung oder einem Kontakt mit einem Kollisionskörper aufgezeichnet.
Durch die in den Unteransprüchen angegebenen Maßnahmen sind vorteilhafte Weiterbildungen und Verbesserungen möglich.

Erfindungsgemäß sind die aufgezeichneten Daten in einem Zeitrahmen von 45 Sekunden vor und 20 Sekunden nach, jedoch mindestens 28 Sekunden vor bis mindestens 15 Sekunden nach dem Ereignis, speicherbar. Dadurch ist eine genaue Rekonstruktion des gesamten Kollisionshergangs gewährleistet. Vorteilhafterweise sind zur Detektion des Kollisionsereignisses Ultraschallsensoren im Frontbereich und/oder im Seitenbereich des Fahrzeugs angebracht. Somit können Annäherungen an das Fahrzeug aus einem breiten Richtungsfeld detektiert werden. Gemäss der Erfindung erfolgt die Positionsermittlung eines Kollisionskörpers bezüglich des Fahrzeugs über eine Mittelung aller Ultraschallsensoren. Dazu werden die Weglängen zwischen dem Kollisionskörper und dem Fahrzeug aller Sensoren aufgenommen und über diese gemittelt. Erfindungsgemäß lassen sich so über die Steuereinheit die Bewegungsrichtung und/oder die Geschwindigkeit eines Kollisionskörpers vor dem Aufprall mit dem Fahrzeug ermitteln. Dadurch ist ein vorausschauendes Handeln möglich. Es können rechtzeitig Brems- oder Ausweichvorgänge eingeleitet werden.

Vorteilhafterweise sind kritische Fahrsituationen manuell speicherbar. So kann ein Fahrzeuginsasse individuell festlegen, ob eine Situation als Unfallereignis angesehen und aufgezeichnet werden soll. Das Einstellen der Aufzeichnungsfunktion an der Steuereinheit signalisiert dem System nach dem Ereignis die besondere Wichtigkeit und veranlasst den Speichermanager, das betreffende Ereignis länger im Speicher zu halten und/oder in einen Permanentspeicher zu verschieben.

Erfindungsgemäß stellt das System bei einem schweren Unfall ein Signal für die Notfallmeldung zur Verfügung, das über geeignete Kommunikationsmedien direkt an eine Notfallzentrale übertragen werden kann. Dieser Notruf kann automatisch auslösbar sein, so dass im Verletzungsfall des Fahrzeuginsassen automatisch Hilfe gerufen wird.

In einer bevorzugten Ausführung ist eine Integration des Systems in einen Fahrtenschreiber des Fahrzeugs möglich. Somit ist im Fahrzeug kein zusätzliches Gerät vorhanden, welches das Armaturenbrett schnell unübersichtlich machen kann. Es ist allerdings auch möglich, das System allein als Unfalldatenschreiber zu nutzen.

Bevorzugter Weise können nach Detektion eines möglichen Kollisionskörpers von der Steuereinheit automatisierte Aktionen wie Lenk- und/oder Bremsvorgänge eingeleitet und/oder Warnsignale an den Fahrer ausgegeben werden. Diese können individuell akustisch oder optisch sein und für bestimmte Einsatzfälle angepasst werden. Dies ist besonders vorteilhaft, wenn die Entfernung zum Kollisionskörper zu gering ist, um mit dem menschlichen Reaktionsvermögen noch reagieren zu können, oder wenn während Nachtfahrten Hindernisse leicht übersehen werden können.

Erfindungsgemäß zeichnet die Steuereinheit permanent Daten auf und löscht bzw. überschreibt diese anschließend wieder, wenn kein Ereignis registriert wurde. Trifft das Fahrzeug mit einer hohen Geschwindigkeit auf ein Hindernis, so registrieren die Beschleunigungssensoren starke negative Beschleunigungen über einen bestimmten Schwellwert. Ist der Schwellwert überschritten, wird ein Unfall registriert und die letzten Sekunden in der angegebenen Zeitspanne in der Steuereinheit werden nicht gelöscht. Gleichzeitig bleiben die Daten der Sekunden nach dem Unfall erhalten. Die Daten bleiben in der Steuereinheit gespeichert und werden in den Permanentspeicher verschoben. Wenn ein Unfall mit einem Soft-Target stattfindet, sprechen die Ultraschallsensoren an. Die Sensoren sind während des gesamten Fahrprozesses aktiv und können auch bei geringen Kollisionswerten Unfälle registrieren.

Das System zur Kollisionsaufzeichnung soll nun anhand einiger Ausführungsbeispiele näher erläutert werden.

Es zeigen:
- Fig. 1: schematische Darstellung des Verlaufs der Kollisionsaufzeichnung,
- Fig. 2: schematische Darstellung eines Fahrzeugs mit erfindungsgemäßem System.

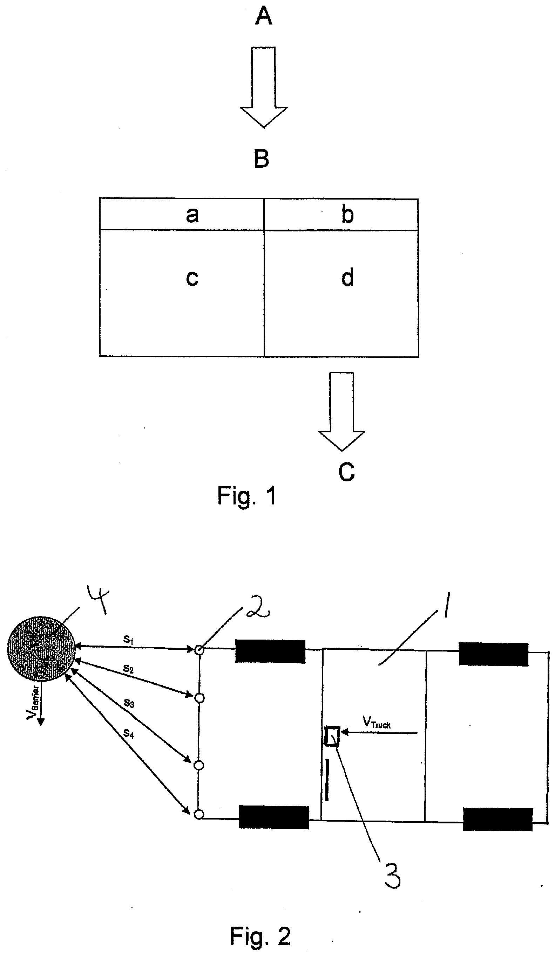

Fig. 1 zeigt den Verlauf einer Kollisionsaufzeichnung. Am Punkt A trifft das Fahrzeug 1 mit hoher Geschwindigkeit auf ein Hindernis 4. Die Beschleunigungssensoren registrieren eine starke negative Beschleunigung über einen festgelegten Schwellwert (B). Kommt es zu einer Schwellwertüberschreitung der Beschleunigungssensoren (a), so wird ein Unfall registriert (c) und die letzten Sekunden der Aufzeichnung werden nicht gelöscht, sondern im System gespeichert. Wird der Schwellwert durch eine zu geringe Aufprallkraft nicht überschritten (b), wie zum Beispiel bei der Kollision mit einem Soft-Target, so wird in herkömmlichen Systemen kein Unfall registriert (d) und die Daten werden vom System gelöscht. An dieser Stelle (C) greift das vorliegende System zur Kollisionsaufzeichnung in Kraftfahrzeugen. Die Daten bleiben erhalten. Die Detektion eines Kollisionskörpers 4 geschieht mittels Ultraschallsensoren 2, die einen geringen Schwellwert aufweisen. Alternativ ist das System manuell einstellbar.

In Fig. 2 ist ein Fahrzeug 1 mit integrierten Sensoren 2 schematisch dargestellt. Das System weist eine Steuerung 3 auf, die einerseits mit am und/oder im Fahrzeug 1 anordenbaren Ultraschallsensoren 2 und andererseits mit im Kraftfahrzeug anordenbaren Beschleunigungsmessern verbunden ist. Unfallereignisse sind von der Steuereinheit 3 aufgrund von Beschleunigungswerten oberhalb eines Grenzwerts detektierbar. Ereignisse unterhalb dieses Grenzwerts, bei einem von den Ultraschallsensoren 2 ermittelten Annäherung oder einem Kontakt mit einem Kollisionskörper 4 werden aufgezeichnet.

Die Daten werden in einem Zeitrahmen von 28 Sekunden vor bis 15 Sekunden nach dem Ereignis gespeichert.

Die Ultraschallsensoren 2 sind im Frontbereich und/oder im Seitenbereich des Fahrzeugs 1 angebracht. Wird ein Hindernis detektiert, nimmt jeder Ultraschallsensor 2 einen Wert auf, über welchen die jeweilige Entfernung S₁, S₂, S₃ bzw. S₄ des Kollisionskörpers 4 bestimmt wird. Hierauf basierend wird durch die Steuereinheit 3 die Positionsveränderung sowie die Geschwindigkeit v_{Barrier} vor dem Aufprall mit dem Fahrzeug 1 bestimmt. Dies geschieht über eine Mittelung aller Ultraschallsensoren 2. Dabei wird die Geschwindigkeit des Kollisionskörpers 4 v_{Barrier} sowie die Geschwindigkeit des Fahrzeugs 1 v_{Truck} berücksichtigt. Auf der Basis dieser Berechnungen als kritisch ermittelte Fahrsituationen sind manuell oder automatisiert speicherbar.

Die Steuereinheit 3 zeichnet permanent Daten auf. Wird kein Ereignis detektiert, so werden die Daten gelöscht und neu aufgezeichnet bzw. überschrieben. Nach einer Kollisionsdetektion bleiben die Daten in der Steuereinheit 3 gespeichert und werden in einen Permanentspeicher verschoben.

Wird ein möglicher Kollisionskörper 4 durch die Ultraschallsensoren 2 detektiert und die Situation vom System als kritisch eingestuft, so werden Warnsignale in optischer oder akustischer Form an den Fahrer abgegeben. Eine Möglichkeit ist ein, in Abhängigkeit von der Entfernung zwischen Kollisionskörper 4 und Fahrzeug 1 stetig lauter und/oder leiser werdenden Piepton. Das System leitet gegebenenfalls automatisierte Aktionen wie Lenk- und/oder Bremsvorgänge ein.

Kommt es zum Aufprall eines Kollisionskörpers 4 am Fahrzeug 1, so wird ein automatischer Notruf ausgelöst.

Das System ist als Unfalldatenschreiber nutzbar. Es kann ebenfalls in bestehende Vorrichtungen im Fahrzeug 1 wie Tachographen integriert oder als selbstständiges System genutzt werden.

## Patentansprüche

1. System zur Kollisionsaufzeichnung in Kraftfahrzeugen (1), wobei das System eine Steuereinheit (3) aufweist, die einerseits mit am oder im Fahrzeug (1) anordenbaren Ultraschallsensoren (2) und andererseits mit im Kraftfahrzeug (1) anordenbaren Beschleunigungsmessern verbunden ist, wobei Unfallereignisse von der Steuereinheit (3) aufgrund von Beschleunigungswerten oberhalb eines Grenzwerts detektierbar sind und auch Ereignisse unterhalb dieses Grenzwerts, bei einer von den Ultraschallsensoren (2) ermittelten Annäherung oder einem Kontakt mit einem Kollisionskörper (4), aufzeichenbar sind, wobei eine Positionsermittlung des Kollisionskörpers (4) bezüglich des Fahrzeugs (1) über eine Mittelung aller Ultraschallsensoren (2) erfolgt.

2. System nach Anspruch 1, **dadurch gekennzeichnet, dass** Daten im Zeitfenster von mindestens 28 Sekunden vor und mindestens 15 Sekunden nach dem Ereignis speicherbar sind.

3. System nach einem der Ansprüche 1 oder 2, **dadurch gekennzeichnet, dass** die Ultraschallsensoren (2) im Frontbereich und/oder im Seitenbereich des Fahrzeugs (1) angebracht sind.

4. System nach einem der vorgehenden Ansprüche, **dadurch gekennzeichnet, dass** die Steuereinheit (3) so ausgebildet ist, dass die Bewegungsrichtung und/oder die Geschwindigkeit eines Kollisionskörpers (4) vor dem Aufprall mit dem Fahrzeug (1) ermittelbar ist.

5. System nach einem der vorgehenden Ansprüche, **dadurch gekennzeichnet, dass** eine kritische Fahrsituationen manuell speicherbar ist.

6. System nach einem der vorgehenden Ansprüche, **dadurch gekennzeichnet, dass** ein automatischer Notruf auslösbar ist.

7. System nach einem der vorgehenden Ansprüche, **dadurch gekennzeichnet, dass** die Integration in einen Fahrtenschreiber eines Fahrzeugs (1) möglich ist.

8. System nach einem der vorgehenden Ansprüche, **dadurch gekennzeichnet, dass** das System allein als Unfalldatenschreiber nutzbar ist.

9. Verfahren zum Betrieb eines Kollisionsaufzeichnungssystems in Kraftfahrzeugen (1), wobei das System eine Steuereinheit (3) aufweist, die einerseits mit am oder im Fahrzeug (1) anordenbaren Ultraschallsensoren (2) verbunden ist und andererseits mit im Kraftfahrzeug (1) anordenbaren Beschleunigungsmessern verbunden ist, wobei Unfallereignisse aufgrund von Beschleunigungswerten oberhalb eines Grenzwertes detektierbar sind und auch Ereignisse unterhalb dieses Grenzwerts bei einem von den Ultraschallsensoren (2) angezeigten Kontakt mit einem Kollisionskörper (4) oder bei einer von den Ultraschallsensoren ermittelten Annäherung an den Kollisionskörper (4) aufgezeichnet werden, wobei eine Positionsermittlung des Kollisionskörpers (4) bezüglich des Fahrzeugs (1) über eine Mittelung aller Ultraschallsensoren (2) erfolgt.

10. Verfahren nach Anspruch 9, **dadurch gekennzeichnet, dass** nach Detektion eines möglichen Kollisionskörpers (4) von der Steuereinheit (3) automatisierte Aktionen wie Lenk- und/oder Bremsvorgänge eingeleitet werden.

11. Verfahren nach einem der Ansprüche 9 oder 10, **dadurch gekennzeichnet, dass** nach Detektion eines möglichen Kollisionskörpers (4) Warnsignale an den Fahrer ausgegeben werden.

12. Verfahren nach einem der Ansprüche 9 bis 11, **dadurch gekennzeichnet, dass** nach einer Kollision eine automatische Notfallmeldung erfolgt.

13. Verfahren nach einem der Ansprüche 9 bis 12, **dadurch gekennzeichnet, dass** die Steuereinheit (3) permanent Daten aufzeichnet und wieder löscht.

14. Verfahren nach einem der Ansprüche 9 bis 13, **dadurch gekennzeichnet, dass** nach Überschreitung eines Schwellwertes die letzten Daten in der Steuereinheit (3) gespeichert bleiben und in einen Permanentspeicher verschoben werden.

## Claims

1. System for recording collisions in motor vehicles (1), wherein the system has a control unit (3) which is connected, on the one hand, to ultrasound sensors (2) which can be arranged on or in the vehicle (1) and, on the other hand, to accelerometers which can be arranged in the motor vehicle (1), wherein accident events can be detected by the control unit (3) on the basis of acceleration values above a limiting value, and even events below this limiting value can be recorded when the ultrasound sensors (2) detect an approach to or contact with a collision object (4), wherein the position of a collision object (4) with respect to the vehicle (1) is determined by averaging all the ultrasound sensors (2).

2. System according to Claim 1, **characterized in that** data in the time window from at least 28 seconds before and at least 15 seconds after the event can be stored.

3. System according to one of Claims 1 and 2, **characterized in that** the ultrasound sensors (2) are mounted in the front region and/or in the side region of the vehicle (1).

4. System according to one of the preceding claims, **characterized in that** the control unit (3) is embodied in such a way that the direction of movement and/or the speed of a collision object (4) before the impact with the vehicle (1) can be determined.

5. System according to one of the preceding claims, **characterized in that** a critical driving situation can be stored manually.

6. System according to one of the preceding claims, **characterized in that** an automatic emergency call can be triggered.

7. System according to one of the preceding claims, **characterized in that** integration into a tachograph of a vehicle (1) is possible.

8. System according to one of the preceding claims, **characterized in that** the system can be used solely as an accident data recorder.

9. Method for operating a collision recording system in motor vehicles (1), wherein the system has a control unit (3) which is connected, on the one hand, to ultrasound sensors (2) which can be arranged on or in the vehicle (1), and is connected, on the other hand, to accelerometers which can be arranged in the motor vehicle (1), wherein accident events can be detected on the basis of acceleration values above a limiting value, and even events below this limiting value are recorded when contact with a collision object (4) is indicated by the ultrasound sensors (2) or when the ultrasound sensors detect an approach to the collision body (4), wherein the position of a collision object (4) with respect to the vehicle (1) is determined by averaging all the ultrasound sensors (2).

10. Method according to Claim 9, **characterized in that** after detection of a possible collision object (4), the control unit (3) initiates automated actions such as steering processes and/or braking processes.

11. Method according to one of Claims 9 and 10, **characterized in that** after detection of a possible collision object (4) warning signals are output to the driver.

12. Method according to one of Claims 9 to 11, **characterized in that** after a collision automatic emergency signaling takes place.

13. Method according to one of Claims 9 to 12, **characterized in that** the control unit (3) continuously records data and deletes it again.

14. Method according to one of Claims 9 to 13, **characterized in that** after a threshold value has been exceeded, the last data in the control unit (3) remains stored and is moved into a permanent memory.

## Revendications

1. Système destiné à l'enregistrement de collisions dans des véhicules à moteur (1), dans lequel le système comporte une unité de commande (3), qui est reliée, d'une part, à des capteurs à ultrasons (2) pouvant être disposés sur ou dans le véhicule (1), et d'autre part, à des accéléromètres pouvant être disposés dans le véhicule à moteur (1), dans lequel des événements d'accidents peuvent être détectés par l'unité de commande (3) sur la base de valeurs d'accélération supérieures à une valeur limite et des événements peuvent également être enregistrés lors d'un rapprochement déterminé par les capteurs à ultrasons (2) ou lors d'un contact avec un corps de collision (4), dans lequel une détermination de position du corps de collision (4) par rapport au véhicule (1) est effectuée par un calcul de moyenne de tous les capteurs à ultrasons (2).

2. Système selon la revendication 1, **caractérisé en ce que** des données se situant dans une fenêtre temporelle d'au moins 28 secondes avant et d'au moins 15 secondes après l'événement peuvent être stockées.

3. Système selon l'une des revendications 1 ou 2, **caractérisé en ce que** les capteurs à ultrasons (2) peuvent être montés dans la zone avant et/ou dans la zone latérale du véhicule (1).

4. Système selon l'une quelconque des revendications précédentes, **caractérisé en ce que** l'unité de commande (3) est conçue de manière à pouvoir déterminer la direction de déplacement et/ou la vitesse d'un corps de collision (4) avant la collision avec le véhicule (1).

5. Système selon l'une quelconque des revendications précédentes, **caractérisé en ce qu'**une situation de conduite critique peut être stockée manuellement.

6. Système selon l'une quelconque des revendications précédentes, **caractérisé en ce qu'**un appel d'urgence automatique peut être déclenché.

7. Système selon l'une quelconque des revendications précédentes, **caractérisé en ce qu'**une intégration dans un tachygraphe d'un véhicule (1) est possible.

8. Système selon l'une quelconque des revendications précédentes, **caractérisé en ce que** le système peut être utilisé seul en tant que tachygraphe.

9. Procédé de mise en fonctionnement d'un système d'enregistrement de collisions dans des véhicules à moteur (1), dans lequel le système comporte une unité de commande (3), qui est reliée d'une part à des capteurs à ultrasons (2), pouvant être disposés sur ou dans le véhicule (1), et d'autre part, à des accéléromètres pouvant être disposés dans le véhicule à moteur (1), dans lequel des événements d'accidents peuvent être détectés sur la base de valeurs d'accélération supérieures à une valeur limite et des événements inférieurs à ladite valeur limite peuvent également être enregistrés lors d'un contact indiqué par les capteurs à ultrasons (2) avec un corps de collision (4) ou lors d'un rapprochement du corps de collision (4) déterminé par les capteurs à ultrasons, dans lequel une détermination de position du corps de collision (4) par rapport au véhicule (1) est effectuée par l'intermédiaire d'un calcul de moyenne de tous les capteurs à ultrasons (2).

10. Procédé selon la revendication 9, **caractérisé en ce que**, après la détection d'un corps de collision (4) possible par l'unité de commande (3), des actions automatisées telles que des processus de braquage et/ou de freinage sont mises en oeuvre.

11. Procédé selon l'une des revendications 9 ou 10, **caractérisé en ce que**, après la détection d'un corps de collision possible (4), des signaux d'alarme sont fournis au conducteur.

12. Procédé selon l'une quelconque des revendications 9 à 11, **caractérisé en ce que**, après une collision, un message d'urgence est envoyé automatiquement.

13. Procédé selon l'une quelconque des revendications 9 à 12, **caractérisé en ce que** l'unité de commande (3) enregistre les données en permanence et les supprime de nouveau.

14. Procédé selon l'une quelconque des revendications 9 à 13, **caractérisé en ce que**, après un dépassement d'une valeur de seuil, les dernières données restent stockées dans l'unité de commande (3) et sont transférées à une mémoire permanente.
